# EUROPEAN PATENT SPECIFICATION

(11) **EP 1 939 646 B1**
(45) Date of publication and mention of the grant of the patent: **07.09.2011**
(21) Application number: 07117328.0
(22) Date of filing: 27.09.2007
(51) Int. Cl.: G01S 5/00, A01K 15/02

(54) **System for remotely locating objects**
System zur Fernortung von Objekten
Système de localisation d'objets à distance

(30) Priority: 28.12.2006 IT BO20060886
(43) Date of publication of application: 02.07.2008
(73) Proprietor: Bazzani, Sauro, 40041 Gaggio Montano (IT)
(72) Inventor: Bazzani, Sauro, 40041 Gaggio Montano (IT)
(74) Representative: Jorio, Paolo

(56) References cited:
- WO-A-01/73466
- WO-A-03/005316
- US-A- 5 689 269
- US-A- 5 857 433
- US-A1- 2005 066 912
- US-B1- 6 246 376

## Description

The present invention relates to a system for remotely locating objects.

In particular, the present invention is advantageously, but not exclusively intended for use in locating animals in general, and in particular for locating hounds, to which the following description expressly refers without prejudice to the generality thereof.

The systems available on the market for determining the location of animals comprise a plurality of radio frequency transmitters, each of which is carried by a respective animal on a specific collar and is suitable to continuously or periodically transmit a respective analog signal characterized by a given frequency, and at least one portable receiver carried by a user and provided with a directional antenna to receive said signal in order to determine the distance and direction of movement of the animal according to the intensity and direction of arrival of the signal that is received.

Said systems have a number of significant drawbacks, such as the high power consumption of the transmitter batteries and interference on other radio systems caused by continuous or periodic transmission, the interference produced by nearby transmitters using the same frequency if several transmitters are used to locate several animals, and significant errors of location due to the presence of natural or artificial obstacles, such as mountains or buildings, which reflect the signals that are transmitted and alter their direction of arrival on the portable receiver. Another drawback of these systems is the low transmission range due to the maximum transmission power limit permitted by the laws governing the continuous or periodic transmission of radio frequency signals.

Other systems for remotely locating objects comprise a portable device provided with a terminal of a cellular network, for example a GSM, GPRS or UMTS network; and a plurality of locating units, each of which is secured to a respective object and comprises a GPS receiver suitable to detect the position of the object, and a cellular network terminal that is able to transmit said position to the portable device via the cellular network. Thanks to the GPS receiver, this type of system allows objects to be located with considerable precision, although the fact that the cellular network is used is also a source of some drawbacks, such as the need to sign a contract with the cellular network operator and pay each time a connection is established and the need for the cellular network to provide adequate radio coverage, a condition that is not always met in many of the environments where such systems are typically used, for example in hunting regions extending over vast, uninhabited areas. Moreover, a detailed and up-to-date map of the area is necessary, on which to locate the position of the object.

U.S. patent application no. 2005/0066912 describes a system for constraining an animal to a specific area, which system comprises a collar to be worn by the animal provided with a GPS receiver and a telemetry transceiver for transmitting the position of the animal to a portable device. U.S. patent no. 5,857,433 relates to system for training and tracking an animal, which system is similar to that described in U.S. patent application no. 2005/0066912. U.S. patent no. 5,689,269 relates to a system comprising at least two GPS receiver which are modified for transmitting, from a first to the second, the position acquired by the first as telemetry data. All the systems described in the above patent documents still have the drawback of a high power consumption.

U.S. patent no. 6,246,376 describes a system comprising two wireless communication devices, wherein location information of the two devices may be transferred between them through a Bluetooth link. The system is unsuitable for locating hounds because the Bluetooth link is a short range link.

The purpose of the present invention is to produce a system for remotely locating objects and/or animals, which overcomes the drawbacks described above and, at the same time, is easy to use and cost-effective to implement.

According to the present invention a method is provided for remotely locating one or more objects as set forth in the appended claims.

The present invention will now be described with reference to the attached drawings, illustrating a nonlimiting embodiment thereof, in which:
- figure 1 is a schematic diagram of a system for remotely locating objects according to the present invention; and
- figure 2 shows the block diagrams of two parts of the system in figure 1.

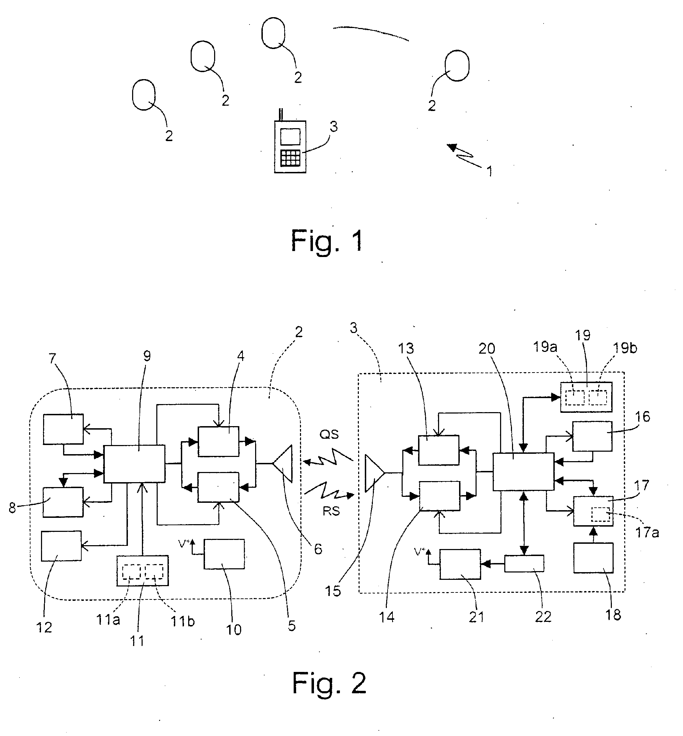

In figure 1, number 1 generically indicates a system for remotely locating objects (not illustrated), for example a pack of hounds. The system 1 comprises a number of locating units 2 equal to the number of objects to be located, each of the locating units 2 being suitable to be secured to a respective object, for example attached to a collar worn by the relative hound; and at least one portable device 3 suitable to be carried by a user (not illustrated) of the system 1 and suitable to interrogate, at the request of the user, each locating unit 2 to receive the position of the relative object, as described in detail below.

With reference to figure 2, each locating unit 2 comprises a radio frequency transmitter 4 and receiver 5, which are suitable to work at a selected carrier frequency in a licence-exempt frequency band, i.e. not reserved for exclusive use, as defined by the regulations harmonizing the use of the spectrum in the country in which the system 1 is used, for example in the frequency range of 865-868 MHz in the European Union or other licence-exempt bands in other countries; and an antenna 6, which is, for example, of the omnidirectional type and is connected to the output of the transmitter 4 and to the input of the receiver 5. The transmitter 4 is suitable to transmit digital radio frequency signals, and in particular signals modulated according to a modulation technique known as FSK (Frequency Shift Keying), and correspondingly the receiver is suitable to receive and demodulate digital radio frequency signals modulated according to said FSK modulation.

The locating unit 2 further comprises a GPS receiver 7 in order to determine the exact position of the object, i.e. the spatial coordinates in terms of latitude, longitude and height at which the GPS receiver 7 is located; a memory 8 to store data concerning the locating unit 2, including a unique identification code associated with said locating unit 2; a control module 9 connected to all the aforesaid components of the locating unit 2; and a battery 10 to supply electricity to the entire locating unit 2.

In the specific case of locating hounds, to which figure 2 refers, the locating unit 2 is provided with a plurality of sensors 11 of a known type, which comprise an acoustic sensor 11a to detect whether the hound is barking and a movement sensor 11b to detect any movement of the hound; and a stimulus generator 12 to produce acoustic, electric or mechanical stimuli for the purpose of giving training instructions to the hound.

Again with reference to figure 2, the portable device 3 comprises a transmitter 13, a receiver 14 and an antenna 15, which are of the same type as the similar transmitter 4, receiver 5 and antenna 6 of the locating unit 2; a GPS receiver 16 to detect the exact position of the user, i.e. the spatial coordinates in terms of the latitude, longitude and height at which said GPS receiver 16 is located; a processing module 17, which is provided with an internal memory 17a and is suitable to process the position information of the various locating units 2 with the position information of the user to determine the distance of the objects from the user; an electronic compass 18 connected to the processing module 17 to determine the direction of the objects with respect to the position of the user; an interface 19, which is connected to the processing module 17 and is provided with a display unit 19a to display information about the located objects and a keypad 19b which the user can use to send commands to the system 1; a control module 20 connected to all the previously described components of the portable device 3; at least one battery 21 to supply electricity to the entire portable device 3; and a communication port 22, for example a USB port, connected to the control module 20 for data transfer between the processing module 17 and an external personal computer, if used (not illustrated), or for re-charging the battery 21.

According to another embodiment, which is not illustrated, each locating unit 2 comprises, in place of the antenna 6, a respective pair of antennae, one of which is connected to the output of the transmitter 4 and the other to the input of the receiver 5. Similarly, the portable device 3 comprises, in place of the antenna 15, a pair of antennae, one of which is connected to the output of the transmitter 13 and the other to the input of the receiver 14.

When in use, each locating unit 2 is normally switched on in stand-by mode, which means that the control module 9 and the receiver 5 are enabled, ready to receive signals transmitted by the portable device 3.

The user of the system 1 who wishes to locate one of the objects sets up, by the keypad 19b, a location request addressed to the locating unit 2 associated with the object in question. The control module 20 is configured so that, following such a request, it controls the transmitter 13 so that it transmits by radio a query signal QS addressed to the desired locating unit 2. In particular, the control module 20 produces a query signal QS which incorporates the identification code associated with that locating unit 2.

The query signal QS is received directly, i.e. not via any radio frequency coverage system, such as a cellular network for example, by the receivers 5 of the locating units 2. The control module 9 of each locating unit 2 is configured to identify the query signal QS that is received, namely to determine whether the request for location that has been received was addressed to that locating unit 2. In particular, identification consists of extracting the identification code incorporated in the query signal QS that has been received and comparing the extracted code with the code associated with the locating unit 2 involved to check that these coincide. If the result of this check is positive, then the control module 9 enables the GPS receiver 7 in order to acquire the exact position of the object and enables the transmitter 4 so that it transmits, via radio, a reply signal RS carrying the exact position of the object.

The reply signal RS is received directly by the receiver 14 of the portable device 3. The control module 20 of the portable device 3 is configured to extract the information about the exact position of the object from the reply signal RS and enable the processing module 17 to determine the distance between that object and the user by calculating the distance between the exact position of the object and the exact position of the user, which is detected by the GPS receiver 16 periodically or following the request by the user. As it calculates the distance, the processing module 17 also determines the direction of the object with respect to the position of the user, i.e. the direction in which the user should move to reach the object, by means of the electronic compass 18 and as a function of the exact positions of the object and of the user. Said distance and direction are appropriately displayed on the display unit 19a.

The exact positions of the object and of the user acquired at each request for location are stored in the memory 17a of the processing module 17, which can be configured to calculate additional parameters concerning the object which depend on said acquired and stored exact positions, for example the speed and direction of movement. These parameters are also displayed on the display unit 19a.

It is worth pointing out that the identification code assigned to each of the locating units 2 is unique not only at the level of the system 1 belonging to the single user but also at the level of several systems 1 belonging to several different users. This avoids the risk of incorrect identification when several systems 1 are used independently.

In the specific case of determining the location of hounds, the control module 20 can be configured to produce a query signal QS that, in addition to incorporating the query code, also incorporates a training signal, which, once the query signal QS has been received and identified by the locating unit 2 being queried, is sent to the stimulus generator 12 to produce a predefined stimulus, for example an ultrasound or a whistle. Moreover, the control module 9 of the locating unit 2 can be configured to incorporate the data obtained by the sensors 11 in the reply signal RS.

The main advantages of the system 1 for remotely locating objects described above derive from the fact that each locating unit 2 is basically only enabled to transmit at the request of the user. Since most electric power consumption occurs when the transmitter 5 is enabled to transmit object position data via radio frequency, this system considerably reduces the power consumption of the battery 11. Furthermore, international laws harmonizing the radio frequency spectrum generally permit higher maximum transmission power limits in case of transmission-on-demand and thus higher transmission ranges.

Another advantage is the significant precision of location, thanks to the use of two GPS receivers 7, 16, without having to use a cellular network, which leads to considerable savings in terms of operating costs, as there is no need to pay the cost of connection to cellular network operators, and flexibility of use, in that the system 1 can be used in areas with no cellular coverage, such as hunting regions extending over vast, uninhabited areas.

Lastly, the use of a location system that transmits digital radio signals, rather than analog signals, reduces errors in reception caused by so-called radio multipaths generated by natural or artificial obstacles between the transmitter and the receiver.

From the above description, it is clear that the system 1 can advantageously be used in a variety of applications. In addition to use in the aforesaid application for locating animals, particularly hounds, the system 1 can also be used to locate children when they get lost in crowded places or to locate cars in a big car-park.

## Claims

1. A method for remotely locating one or more hounds by means of a system (1) comprising one or more locating units (2), each of which is suitable to be secured to a respective hound and comprises a first GPS receiver (7) to detect the exact position of said hound and first transmitting means (4) to transmit said exact position, and at least one portable device (3), which is suitable to be carried by a user of the system (1) and comprises first receiving means (14) to receive the exact positions of the hounds and second transmitting means (13); each of the locating units (2) comprising second receiving means (5) and first control means (9); the method being **characterized in that** said first (4) and second (13) transmitting means and said first (14) and second (5) receiving means use radio frequencies in the frequency range of 865-868 MHz; and **in that** the method comprises:
- transmitting a query signal (QS) addressed to a desired locating unit (2) by said second transmitting means (13);
- receiving the query signal (QS) directly by said second receiving means (5) of each locating unit (2);
- by said first control means (9) of each locating unit (2), identifying the query signal (QS) that has been received to determine whether it was addressed to that locating unit (2) and, consequently, enabling said first GPS receiver (7) in order to acquire the exact position of the hound and enabling said first transmitting means (4) to transmit a reply signal (RS) carrying said exact position; and
- receiving said reply signal (RS) directly by said first receiving means (14) of the portable device (3).

2. The method according to claim 1, wherein said portable device (3) comprises second control means (20); the method further comprising:
- controlling, at the request of said user and by said second control means (20), said second transmitting means (13) so that they transmit said query signal (QS).

3. The method according to claim 2, wherein said locating units (2) comprise respective storage means (8) to store respective identification codes, each of which is associated exclusively with the relative locating unit (2) ; said query signal (QS) being identified on the basis of said identification codes.

4. The method according to claim 3, further comprising:
- incorporating the identification code associated with said desired locating unit (2) in said query signal (QS) by said second control means (20) of the portable device (3);
- extracting the identification code incorporated in the query signal (QS) and comparing the extracted identification code with the identification code stored in said storage means (8) by said first control means (9) of the locating units (2).

5. The method according to one of the claims from 1 to 4, wherein said portable device (3) comprises a second GPS receiver (16) to detect the exact position of said user and processing means (17) to calculate the distance between the exact position of the user and said exact position of the hound.

6. The method according to claim 5, wherein said portable device (3) comprises orientation means (18) to determine, on the basis of said exact positions of the hound and of the user, the direction of the hound with respect to the position of the user.

7. The method according to claim 6, wherein said orientation means comprise an electronic compass (18) connected to said processing means (17).

8. The method according to one of the claims from 1 to 7, wherein said first (4) and second (13) transmission means are suitable to transmit digital radio frequency signals and said first (14) and second (5) receiving means are suitable to receive said digital radio frequency signals.

9. The method according to claim 8, wherein said digital radio frequency signals are modulated according to an FSK modulation.

## Patentansprüche

1. Verfahren zum Fernorten eines oder mehrerer Hunde mithilfe eines Systems (1) umfassend ein oder mehrere Ortungseinheiten (2), von denen jede dazu geeignet ist, auf einen jeweiligen Hund festgelegt zu werden, und einen ersten GPS-Empfänger (7) umfasst, um die exakte Position des Hundes zu erfassen, und ein erstes Übertragungsmittel (4), um die exakte Position zu übertragen, und wenigstens eine tragbare Einrichtung (3), welche dazu geeignet ist, von einem Benutzer des Systems (1) getragen zu werden und aufweist ein erstes Empfangsmittel (14), um die exakten Positionen der Hunde zu empfangen und zweite Übertragungsmittel (13); wobei jede der Ortungseinheiten (2) aufweist ein zweites Empfangsmittel (5) und ein erstes Steuermittel (9); wobei das Verfahren **dadurch gekennzeichnet ist, dass** das erste (4) und zweite (13) Übertragungsmittel und das erste (14) und zweite (5) Empfangsmittel Hochfrequenzen im Frequenzbereich von 865 bis 868 MHz verwenden; und dass das Verfahren umfasst:
- Übertragen eines Abfragesignals (QS), das an eine gewünschte Ortungseinheit (2) adressiert ist, durch das zweite Übertragungsmittel (13);
- Empfangen des Abfragesignals (QS) direkt durch das zweite Empfangsmittel (5) jeder Ortungseinheit (2);
- wobei eine erste Steuereinrichtung (9) für jede Ortungseinheit (2) das Abfragesignal (QS), das empfangen wurde, identifiziert, um festzustellen, ob dieses an diese Ortungseinheit (2) adressiert war, und infolgedessen den ersten GPS-Empfänger (7) in die Lage versetzt, die exakte Position des Hundes zu erfassen und das erste Übertragungsmittel (4) in die Lage versetzt, ein Antwortsignal (RS) zu übertragen, welches die exakte Position trägt; und
- Empfangen des Antwortsignals (RS) direkt durch das erste Empfangsmittel (14) der tragbaren Einrichtung (3).

2. Verfahren nach Anspruch 1, in welchem die tragbare Einrichtung (3) eine zweite Steuereinrichtung (20) umfasst; wobei das Verfahren ferner umfasst:
- Steuern des zweiten Übertragungsmittels (13) auf Anforderung des Benutzers und durch die zweite Steuereinrichtung (20), so dass diese das Abfragesignal (QS) übertragen.

3. Verfahren nach Anspruch 2, in welchem die Ortungseinheit (2) jeweilige Speichermittel (8) umfassen, um jeweilige Identifikationscodes zu speichern, von denen jeder ausschließlich der zugehörigen Ortungseinheit (2) zugeordnet ist; wobei das Abfragesignal (QS) auf der Basis der Identifikationscodes identifiziert wird.

4. Verfahren nach Anspruch 3, ferner mit:
- Einbauen des Identifikationscodes, der der gewünschten Ortungseinheit (2) zugeordnet ist, in das Abfragesignal (QS) durch die zweite Steuereinrichtung (20) der tragbaren Einrichtung (3);
- Extrahieren des in das Abfragesignal (QS) eingebauten Identifikationscodes und Vergleichen des extrahierten Identifikationscodes mit dem in der Speichereinrichtung (8) gespeicherten Identifikationscode durch die erste Steuereinrichtung (9) der Ortungseinheiten (2).

5. Verfahren nach einem der Ansprüche 1 bis 4, in welchem die tragbare Einrichtung (3) einen zweiten GPS-Empfänger (16) umfasst, um die exakte Position des Benutzers zu erfassen, und eine Verarbeitungseinrichtung (17), um den Abstand zwischen der exakten Position des Benutzers und der exakten Position des Hundes zu berechnen.

6. Verfahren nach Anspruch 5, in welchem die tragbare Einrichtung (3) eine Orientierungseinrichtung (18) umfasst, um auf der Basis der exakten Positionen des Hundes und des Benutzers die Richtung des Hundes in Bezug auf die Position des Benutzers zu bestimmen.

7. Verfahren nach Anspruch 6, in welchem die Orientierungseinrichtung einen elektronischen Kompass (18) umfasst, der mit der Verarbeitungseinrichtung (17) verbunden ist.

8. Verfahren nach einem der Ansprüche von 1 bis 7, in welchem das erste (4) und zweite (13) Übertragungsmittel dazu geeignet sind, digitale Hochfrequenzsignale zu übertragen und das erste (14) und zweite (5) Empfangsmittel dazu geeignet sind, digitale Hochfrequenzsignale zu empfangen.

9. Verfahren nach Anspruch 8, in welchem digitale Hochfrequenzsignale entsprechend einer FSK-Modulation moduliert werden.

## Revendications

1. Procédé destiné à localiser à distance un ou plusieurs chiens de chasse au moyen d'un système (1) comprenant une ou plusieurs unités de localisation (2), chacune d'entre elles est adaptée pour être fixée à un chien de chasse respectif et comprend un premier récepteur GPS (7) pour détecter la position exacte dudit chien de chasse et un premier moyen de transmission (4) pour transmettre ladite position exacte, et au moins un dispositif portatif (3), qui est adapté pour être porté par un utilisateur du système (1) et comprend un premier moyen de réception (14) pour recevoir les positions exactes des chiens de chasse et un deuxième moyen de transmission (13); chacune des unités de localisation (2) comprenant un deuxième moyen de réception (5) et un premier moyen de commande (9) ; le procédé étant **caractérisé en ce que** lesdits premier (4) et deuxième (13) moyens de transmission et lesdits premier (14) et deuxième (5) moyens de réception utilisent des fréquences radio dans la plage de fréquences de 865 à 868 MHz ; et **en ce que** le procédé comprend :
- la transmission d'un signal d'interrogation (QS) adressé à une unité de localisation souhaitée (2) par ledit deuxième moyen de transmission (13) ;
- la réception du signal d'interrogation (QS) directement par ledit deuxième moyen de réception (5) de chaque unité de localisation (2) ;
- par ledit premier moyen de commande (9) de chaque unité de localisation (2), l'identification du signal d'interrogation (QS) qui a été reçu pour déterminer s'il était adressé à cette unité de localisation (2) et, en conséquence, l'activation dudit premier récepteur GPS (7) afin d'acquérir la position exacte du chien de chasse et l'activation dudit premier moyen de transmission (4) pour transmettre un signal de réponse (RS) portant ladite position exacte ; et
- la réception dudit signal de réponse (RS) directement par ledit premier moyen de réception (14) du dispositif portatif (3).

2. Procédé selon la revendication 1, dans lequel ledit dispositif portatif (3) comprend un deuxième moyen de commande (20) ; le procédé comprenant en outre :
- le contrôle, à la demande dudit utilisateur et par ledit deuxième moyen de commande (20), dudit deuxième moyen de transmission (13) de façon à ce qu'il transmette ledit signal de réponse (QS).

3. Procédé selon la revendication 2, dans lequel lesdites unités de localisation (2) comprennent des moyens de mémorisation respectifs (8) pour mémoriser des codes d'identification respectifs, chacun étant associé exclusivement à l'unité de localisation relative (2) ; ledit signal d'interrogation (QS) étant identifié sur la base desdits codes d'identification.

4. Procédé selon la revendication 3, comprenant en outre :
- l'incorporation du code d'identification associé à ladite unité de localisation souhaitée (2) dans ledit signal d'interrogation (QS) par ledit deuxième moyen de commande (20) du dispositif portatif (3) ;
- l'extraction du code d'identification incorporé dans le signal d'interrogation (QS) et la comparaison du code d'identification extrait avec le code d'identification mémorisé dans ledit moyen de mémorisation (8) par ledit premier moyen de commande (9) des unités de localisation (2).

5. Procédé selon l'une des revendications 1 à 4, dans lequel ledit dispositif portatif (3) comprend un deuxième récepteur GPS (16) pour détecter la position exacte dudit utilisateur et un moyen de traitement (17) pour calculer la distance entre la position exacte de l'utilisateur et ladite position exacte du chien de chasse.

6. Procédé selon la revendication 5, dans lequel ledit dispositif portatif (3) comprend un moyen d'orientation (18) pour déterminer, sur la base desdites positions exactes du chien de chasse et de l'utilisateur, la direction du chien de chasse par rapport à la position de l'utilisateur.

7. Procédé selon la revendication 6, dans lequel ledit moyen d'orientation comprend une boussole électronique (18) connectée audit moyen de traitement (17).

8. Procédé selon l'une des revendications 1 à 7, dans lequel lesdits premier (4) et deuxième (13) moyens de transmission sont adaptés pour transmettre des signaux à haute fréquence numériques et lesdits premier (14) et deuxième (5) moyens de réception sont adaptés pour recevoir lesdits signaux à haute fréquence numériques.

9. Procédé selon la revendication 8, dans lequel lesdits signaux à haute fréquence numériques sont modulés selon une modulation FSK.
